# EUROPÄISCHE PATENTSCHRIFT

(11) **EP 0 762 794 B1**
(45) Veröffentlichungstag und Bekanntmachung des Hinweises auf die Patenterteilung: **22.10.2003**
(21) Anmeldenummer: 96113649.6
(22) Anmeldetag: 26.08.1996
(51) Int. Cl.: H04Q 7/38, H04Q 7/22

(54) **Verfahren und System zur Übertragung von Nachrichten zwischen Einrichtungen eines Mobilfunknetzes**
Method and system for information transmission between devices of a radio mobile network
Procédé et système de transmission d'informations entre équipements d'un réseau radio mobile

(30) Priorität: 31.08.1995 DE 19532185
(43) Veröffentlichungstag der Anmeldung: 12.03.1997
(73) Patentinhaber: SIEMENS AKTIENGESELLSCHAFT, 80333 München (DE)
(72) Erfinder: Büttner, Hartmut, Dipl.-Ing., 36166 Haunetal (DE)

(56) Entgegenhaltungen:
- EP-A- 0 467 534
- EP-A- 0 512 962
- WO-A-94/23506

## Beschreibung

Die Erfindung betrifft ein Verfahren und ein System zur Übertragung von Nachrichten zwischen Einrichtungen eines Mobilfunknetzes mit mindestens einer zentralen Teilnehmerdatenbasis.

Ein digitales, zellular aufgebautes Mobilfunknetz nach dem GSM-Standard (Global System for Mobile Communication) ist aus der Systembeschreibung "D900 - Mobile Communication System", System Description SYD, 1992 (Bestellnummer A30808-X3231-X-2-7618) bekannt. Wesentliche Bestandteile des Mobilfunknetzes zur Übertragung von Sprache und Daten sind ein Basisstationssystem (Base Station System), ein Vermittlungssystem (Switching Subsystem) und ein Betriebs- und Wartungssystem (Operating and Maintenance Subsystem). Das einen Funkteil und einen verdrahteten Teil aufweisende Basisstationssystem verfügt über eine Schnittstelle zu den Mobilstationen von Funkteilnehmern und über eine Schnittstelle zum Vermittlungssystem. Das Vermittlungssystem übernimmt dabei die Vermittlungsfunktionen im Mobilfunknetz einschließlich des Aufbaus von Verbindungen innerhalb des Mobilfunknetzes und zu anderen Telekommunikationsnetzen auf Grund von Anrufen, die von den Funkteilnehmern abgehen oder bei den Funkteilnehmern eintreffen.

Die GSM-Spezifikation 09.02, Final Draft, Nov. 1994, beschreibt ein für das länderübergreifende Mobilfunknetz genormtes Übertragungsprotokoll (Mobile Application Part - MAP), um die durch die Mobilität der Funkteilnehmer bzw. derer Mobilstationen bedingten Besonderheiten bei Anrufen oder bei Datenaustausch über die Ländergrenzen hinweg einheitlich behandeln zu können. Dabei werden Nachrichten gemäß dem genormten Übertragungsprotokoll (MAP) zwischen den Einrichtungen des Mobilfunknetzes übertragen.

Im GSM-Mobilfunknetz werden Teilnehmerrufnummern (MSISDN) für die Funkteilnehmer vergeben, die Teil der in einer zentralen Teilnehmerdatenbasis gespeicherten Teilnehmerdaten sind. Anhand einer am Anfang der Teilnehmerrufnummer stehenden Ziffernkombination wird eine Anrufverbindung immer eindeutig zu genau einer festgelegten zentralen Teilnehmerdatenbasis im Mobilfunknetz hergestellt. Außerdem wird bei einem Aufenthaltsortwechsel (location update) des Funkteilnehmers anhand der ersten Ziffern einer internationalen Funkteilnehmerkennung (IMSI) zu der richtigen zentralen Teilnehmerdatenbasis verzweigt. Diese internationale Funkteilnehmerkennung wird bei der Herstellung der SIM-Karte (Subscriber Identity Module) bereits eingetragen und ist somit dem Funkteilnehmer physikalisch fest zugeordnet, bevor der Funkteilnehmer im Netz eingerichtet ist. Die Teilnehmerrufnummer wird hingegen erst beim Freischalten des Funkteilnehmers vergeben.

Will man einem Funkteilnehmer eine gewünschte Teilnehmerrufnummer jedoch frei zuweisen, beginnend mit einer Ziffernkombination, die zu einer Durchschaltung des Anrufs zu einer anderen als der festgelegten zentralen Teilnehmerdatenbasis führt, ist dies nicht ohne Zusatzaufwand möglich. Der Zusatzaufwand besteht beispielsweise darin, zusätzlich zur gewünschten Teilnehmerrufnummer eine unbedingte Anrufumlenkung (Call Forwarding Unconditional) auf die Teilnehmerrufnummer, die die Ziffernkombination zur Identifikation der festgelegten Teilnehmerdatenbasis enthält, für den Funkteilnehmer einzurichten. Die letztgenannte Teilnehmerrufnummer ist zwar nach außen hin nicht sichtbar, für den Netzbetreiber des Mobilfunknetzes jedoch für eine Vergabe an einen anderen Funkteilnehmer verbraucht. Bei einer derartigen Vorgehensweise werden für den Funkteilnehmer zwei Teilnehmerrufnummern aus der möglichen Anzahl von Teilnehmerrufnummern, die dem Netzbetreiber zur Verfügung stehen, benutzt. Darüber hinaus ist eine Anrufumlenkung gestartet worden, ohne daß der Funkteilnehmer das zusätzliche Leistungsmerkmal wünscht. Dadurch können auch Probleme bei der Anzeige der Teilnehmerrufnummer und bei der Festlegung der für den jeweiligen Anruf einzubehaltenden Gebühren auftreten.

Es ist Aufgabe der vorliegenden Erfindung, ein Verfahren und ein System der eingangs genannten Art anzugeben, durch das eine flexiblere Behandlung von Nachrichtenübertragungen im Mobilfunknetz mit möglichst geringem zusätzlichem Aufwand erreicht werden kann.

Diese Aufgabe wird gemäß der Erfindung durch die Merkmale des Patentanspruchs 1 hinsichtlich des Verfahrens und durch die Merkmale des Patentanspruchs 8 hinsichtlich des Systems gelöst. Weiterbildungen der Erfindung sind in Unteransprüchen angegeben.

Demnach werden auf Grund einer in der zentralen Teilnehmerdatenbasis gespeicherten Datenbasisinformation zur Kennzeichnung einer zentralen Ziel-Teilnehmerdatenbasis die Nachrichten zu dieser zentralen Ziel-Teilnehmerdatenbasis gesendet, in der die Teilnehmerdaten des Funkteilnehmers gespeichert sind. Dadurch werden Nachrichten, die beispielsweise Anfragen an die zentrale Teilnehmerdatenbasis enthalten, nicht - wie bei einem genormten Übertragungsprotokoll (z.B. MAP) vorgesehen - direkt beantwortet, sondern zu einer anderen zentralen Teilnehmerdatenbasis in demselben Mobilfunknetz weitergeleitet, da das Speichern der Teilnehmerdaten für den Funkteilnehmer in der zentralen Ziel-Teilnehmerdatenbasis günstiger oder sinnvoller ist. Die Verzweigung zu der zentralen Ziel-Teilnehmerdatenbasis erfolgt auf einfache Weise durch die in der ursprünglichen zentralen Teilnehmerdatenbasis eingetragene Datenbasisinformation, die die zentrale Ziel-Teilnehmerdatenbasis identifiziert. Somit ergeben sich bei geringem zusätzlichem Aufwand flexiblere Möglichkeiten in der Gestaltung des Mobilfunknetzes und in der Verwaltung der Funkteilnehmer und deren Teilnehmerdaten.

Die Erfindung wird anhand eines in Figuren dargestellten Ausführungsbeispiels näher erläutert. Im einzelnen zeigen
- Figur 1: den Nachrichtenfluß zwischen den Einrichtungen des Mobilfunknetzes bei einer Aufenthaltsabfrage auf Grund eines an den Funkteilnehmer gerichteten Anrufs und
- Figur 2: den Nachrichtenfluß zwischen den Einrichtungen des Mobilfunknetzes bei einer Anfrage auf Grund eines Aufenthaltsortwechsels des Funkteilnehmers.

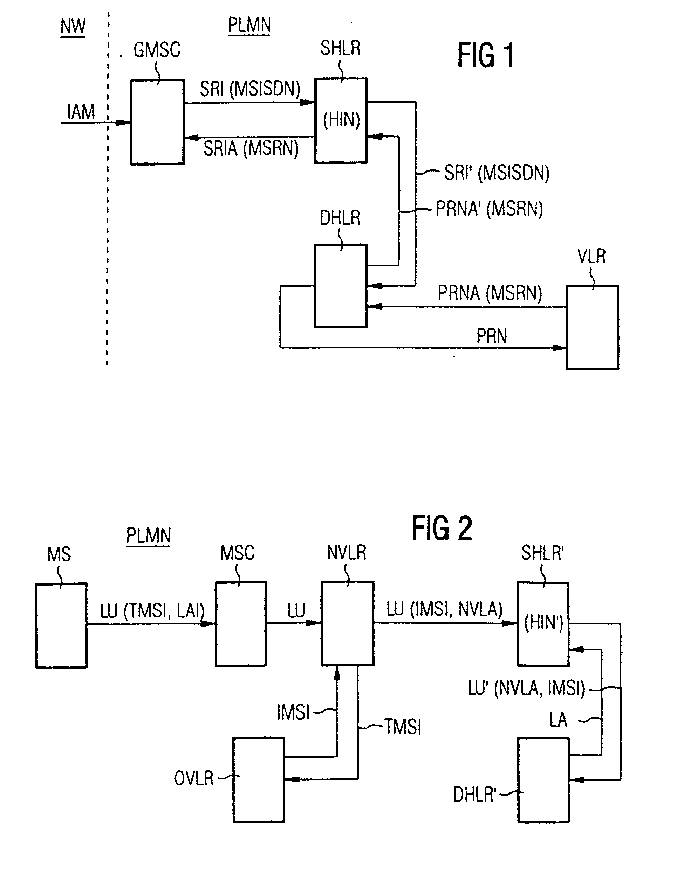

Figur 1 zeigt in einem Blockschaltbild die Übertragung von Nachrichten zwischen Einrichtungen eines Mobilfunknetzes PLMN, das eine Struktur gemäß dem GSM-Standard aufweist. Von dem Nachrichtenfluß, der auf einem an den Funkteilnehmer gerichteten Anruf basiert, sind eine Mobilvermittlungsstelle GMSC, eine zentrale Teilnehmerdatenbasis SHLR, eine zentrale Ziel-Teilnehmerdatenbasis DHLR, sowie eine dezentrale Teilnehmerdatenbasis VLR betroffen. Die im Mobilfunknetz PLMN an der Schnittstelle zu anderen Netzen angeordnete Mobilvermittlungsstelle GMSC (Gateway Mobile Switching Center) empfängt eine Adressennachricht IAM (Initial Adress Message), die die Ankunft des im Mobilfunknetz eintreffenden Anrufs signalisiert. Der Anruf wird von einem Teilnehmer eines anderen Telekommunikationsnetzes NW initiiert. Das Telekommunikationsnetz NW besteht beispielsweise aus einem leitungsgebundenen Festnetz, so daß der anrufende Teilnehmer ein Festnetzteilnehmer ist, oder aus einem anderen Mobilfunknetz.

Um den Anruf zu dem angerufenen Funkteilnehmer durchschalten zu können, sendet die Mobilvermittlungsstelle GMSC eine Nachricht SRI (Send Routing Information) mit einer Aufenthaltsabfrage (Interrogation) unmittelbar an die zentrale Teilnehmerdatenbasis SHLR aus. Dabei ist die zentrale Teilnehmerdatenbasis SHLR, die durch eine Ziffernkombination am Anfang der Teilnehmerrufnummer festgelegt ist, beispielsweise die zum angerufenen Funkteilnehmer am nächsten liegende Teilnehmerdatenbasis. Mit der Aufenthaltsabfrage in der Nachricht SRI wird die Teilnehmerrufnummer MSISDN des angerufenen Funkteilnehmers zur zentralen Teilnehmerdatenbasis SHLR mitgesendet. Die Aufenthaltsabfrage dient zur Bestimmung des Aufenthaltsorts des angerufenen Funkteilnehmers. Der auf Grund der Mobilität des Funkteilnehmers sich ändernde Aufenthaltsort ist an einer Gebietsnummer erkennbar, die jeweils ein Ortsgebiet (local area) bezeichnet, dem eine dezentrale Teilnehmerdatenbasis zur Speicherung von Teilnehmerdaten für die Dauer der Zuständigkeit für den Funkteilnehmer zugeordnet ist.

Die Teilnehmerrufnummer MSISDN des angerufenen Funkteilnehmers weist die Ziffernkombination auf, die die zur Behandlung des Anrufs vorgesehene zentrale Teilnehmerdatenbasis SHLR festlegt. In der zentralen Teilnehmerdatenbasis SHLR, die die Nachricht SRI mit der Aufenthaltsabfrage empfängt, ist für den Funkteilnehmer eine Datenbasisinformation HIN eingerichtet, durch die die zentrale Ziel-Teilnehmerdatenbasis DHLR mit dem für den angerufenen Funkteilnehmer gespeicherten vollen Teilnehmerdatensatz ausgewählt wird. Es ist daher nicht erforderlich, in der zentralen Teilnehmerdatenbasis SHLR für den Funkteilnehmer einen ganzen Teilnehmerdatensatz einzurichten, sondern lediglich die Teilnehmerrufnummer MSISDN zusammen mit der Datenbasisinformation HIN zu hinterlegen. Die Datenbasisinformation HIN bewirkt, daß die Aufenthaltsabfrage in einer neuen Nachricht SRI' von der ursprünglichen zentralen Teilnehmerdatenbasis SHLR an die zentrale Ziel-Teilnehmerdatenbasis DHLR weitergeleitet wird. Die neue Nachricht SRI' mit der Teilnehmerrufnummer MSISDN wird von der ursprünglichen zentralen Teilnehmerdatenbasis SHLR gestartet, um den Aufenthaltsort des angerufenen Funkteilnehmers anhand der in der zentralen Ziel-Teilnehmerdatenbasis DHLR gespeicherten Teilnehmerdaten zu ermitteln. Auf diese Weise kann dem Funkteilnehmer eine gewünschte Teilnehmerrufnummer frei zugewiesen werden, beginnend mit einer Ziffernkombination, die unabhängig von der Zuordnung zur festgelegten zentralen Teilnehmerdatenbasis - im vorliegenden Beispiel der zentralen Teilnehmerdatenbasis SHLR - ist. Die Wunschrufnummer beginnt mit Ziffern, anhand der die Anrufe zu einer anderen als der jeweils der Funkteilnehmerkennung (IMSI) zugeordneten Teilnehmerdatenbasis - im vorliegenden Beispiel zu der zentralen Teilnehmerdatenbasis DHLR - gelenkt werden.

Abweichend von dem für das GSM-Mobilfunknetz genormten Übertragungsprotokoll (Mobile Application Part MAP) werden in der zentralen Teilnehmerdatenbasis SHLR ankommende Nachrichten nicht direkt beantwortet, sondern zu einer weiteren zentralen Teilnehmerdatenbasis im eigenen Mobilfunknetz weitergeleitet, da die Speicherung der Teilnehmerdaten für den jeweiligen Funkteilnehmer in dieser zusätzlichen zentralen Teilnehmerdatenbasis günstiger oder sinnvoller ist. Damit ergibt sich eine höhere Flexibilität bezüglich der Gestaltung des Mobilfunknetzes und bezüglich der Verwaltung der Teilnehmerdaten von Funkteilnehmern.

Angenommen, die zentrale Teilnehmerdatenbasis SHLR befindet sich in München und erhält eine Aufenthaltsabfrage von der Mobilvermittlungsstelle GMSC zum Aufenthaltsort des angerufenen Funkteilnehmers, und angenommen, der angerufene Funkteilnehmer ist mit seinem Teilnehmerdatensatz aber tatsächlich in der zentralen Teilnehmerdatenbasis DHLR in Hamburg registriert, startet die zentrale Teilnehmerdatenbasis SHLR in München eine Aufenthaltsabfrage und richtet diese in der neuen Nachricht SRI' an die zentrale Teilnehmerdatenbasis DHLR in Hamburg. Dabei ist in der zentralen Teilnehmerdatenbasis SHLR in München die Datenbasisinformation HIN zur Kennzeichnung der zentralen Teilnehmerdatenbasis DHLR in Hamburg unter der Teilnehmerrufnummer MSISDN des angerufenen Funkteilnehmers eingerichtet.

Das Ergebnis der Aufenthaltsabfrage wird von der zentralen Teilnehmerdatenbasis DHLR in Hamburg zur zentralen Teilnehmerdatenbasis SHLR in München rückübertragen, die die angeforderten Informationen zur anfragenden Mobilvermittlungsstelle GMSC weiterreicht. Dabei bemerkt die Mobilvermittlungsstelle GMSC nicht, daß die angeforderten Informationen tatsächlich aus der zentralen Teilnehmerdatenbasis DHLR in Hamburg und nicht von der zentralen Teilnehmerdatenbasis SHLR in München, an die die Aufenthaltsabfrage gerichtet war, abgeholt wurden. Gegenüber einer Lösung mit Anrufumlenkung der gewünschten Teilnehmerrufnummer in München auf die andere Teilnehmerrufnummer in Hamburg wird bei der Anrufbehandlung gemäß der Erfindung lediglich eine Teilnehmerrufnummer benötigt, die in beiden zentralen Teilnehmerdatenbasen eingerichtet ist. Für den Funkteilnehmer wird in der zentralen Ziel-Teilnehmerdatenbasis der Teilnehmerdatensatz angelegt und in der ursprünglichen zentralen Teilnehmerdatenbasis ein Verweis auf die zentrale Ziel-Teilnehmerdatenbasis mit den darin gespeicherten Teilnehmerdaten in Form der Datenbasisinformation eingerichtet.

Eine vorteilhafte Anwendung der Anrufbehandlung gemäß der Erfindung besteht beispielsweise darin, daß die Aufenthaltsabfragen im Mobilfunknetz nur noch zu einer einzigen zentralen Teilnehmerdatenbasis im Mobilfunknetz gehen und diese zentrale Teilnehmerdatenbasis die Aufenthaltsabfrage an die richtige zentrale Ziel-Teilnehmerdatenbasis weiterleitet. Somit könnten internationale Absprachen über optimierten Verbindungsaufbau (Optimized Routing), bei dem Abfragen von fremden Telekommunikationsnetzen direkt zu den zentralen Teilnehmerdatenbasen unter Umgehung der Mobilvermittlungsstellen an den Schnittstellen zu diesen Telekommunikationsnetzen gerichtet werden, stark vereinfacht werden.

Nach Empfang der neuen Nachricht SRI' mit der die Teilnehmerrufnummer MSISDN enthaltenden Aufenthaltsabfrage richtet die zentrale Ziel-Teilnehmerdatenbasis DHLR eine Anfrage PRN (Provide Roaming Number) an die dezentrale Teilnehmerdatenbasis VLR. Die dezentrale Teilnehmerdatenbasis VLR liefert als Antwort auf die Anfrage PRN eine Mobilitätsnummer MSRN (Mobile Subscriber Roaming Number) zur Festlegung des Aufenthaltsorts des angerufenen Funkteilnehmers und sendet diese Mobilitätsnummer MSRN in einer Nachricht PRNA zur zentralen Ziel-Teilnehmerdatenbasis DHLR zurück. Die dezentrale Teilnehmerdatenbasis VLR ist die Teilnehmerdatenbasis, in der der angerufene Funkteilnehmer mit den zugehörigen Teilnehmerdaten solange registriert ist, bis er das Ortsgebiet verläßt und in die Zuständigkeit einer anderen dezentralen Teilnehmerdatenbasis fällt. Die empfangene Mobilitätsnummer MSRN sendet die zentrale Ziel-Teilnehmerdatenbasis DHLR in einer entsprechenden Nachricht PRNA' zur zentralen Teilnehmerdatenbasis SHLR, die die Mobilitätsnummer MSRN als Antwort auf die Aufenthaltsabfrage in einer Nachricht SRIA zur abfragenden Mobilvermittlungsstelle GMSC rücksendet.

Figur 2 zeigt ein weiteres Beispiel für das nicht dem GSM-Standard entsprechende Weiterleiten von Nachrichten, die an eine zentrale Teilnehmerdatenbasis im Mobilfunknetz gerichtet werden. Darin ist der Nachrichtenfluß zwischen Einrichtungen des Mobilfunknetzes PLMN dargestellt, wenn bei einem Aufenthaltsortwechsel des Funkteilnehmers eine Anfrage zur Erneuerung der Informationen über den aktuellen Aufenthaltsort des Funkteilnehmers an die zentrale Teilnehmerdatenbasis gerichtet wird. Die Informationen über den Aufenthaltsort des Funkteilnehmers auf den neuesten Stand zu bringen, ist beispielsweise notwendig, sobald der Funkteilnehmer von einem bisherigen Ortsgebiet in ein neues Ortsgebiet wechselt, wodurch die Teilnehmerdaten in der dezentralen Teilnehmerdatenbasis bzw. in der zentralen Teilnehmerdatenbasis geändert werden müssen. Die Einrichtungen des Mobilfunknetzes PLMN, die von dem Nachrichtenfluß betroffen sind, bestehen aus einer Mobilstation MS, einer Mobilvermittlungsstelle MSC, einer ursprünglichen dezentralen Teilnehmerdatenbasis OVLR für das alte Ortsgebiet und einer neuen dezentralen Teilnehmerdatenbasis NVLR für das neue Ortsgebiet, einer dezentralen Teilnehmerdatenbasis SHL-R', sowie einer zentralen Ziel-Teilnehmerdatenbasis DHLR'.

Die Mobilstation MS sendet eine Nachricht LU (Location Update) zu der Mobilvermittlungsstelle MSC. Dabei werden in der Nachricht LU eine Ortsgebietsnummer LAI und eine temporäre Teilnehmerkennung TMSI übertragen. An die Mobilvermittlungsstelle MSC ist die auf Grund des Aufenthaltsortwechsels des Funkteilnehmers zuständige neue dezentrale Teilnehmerdatenbasis NVLR angeschlossen. Die dezentrale Teilnehmerdatenbasis NVLR erkennt an der eintreffenden Nachricht LU, daß die übermittelte Ortsgebietskennung LAI nicht zu dem neuen Ortsgebiet gehört und fordert von der bisherigen dezentralen Teilnehmerdatenbasis OVLR eine internationale Funkteilnehmeridentifikationsnummer IMSI des Funkteilnehmers an. Zu diesem Zweck wird die temporäre Teilnehmerkennung TMSI verwendet, die an die bisherige dezentrale Teilnehmerdatenbasis OVLR übergeben wird.

Die neue dezentrale Teilnehmerdatenbasis NVLR richtet in der Nachricht LU eine Anfrage an die zentrale Teilnehmerdatenbasis SHLR', mit der die internationale Funkteilnehmeridentifikationsnummer IMSI und die Adresse NVLA der dezentralen Teilnehmerdatenbasis NVLR übertragen werden. Die zentrale Teilnehmerdatenbasis SHLR' speichert unter der Funkteilnehmeridentifikationsnummer IMSI eine Datenbasisinformation HIN', durch die zu der zentralen Ziel-Teilnehmerdatenbasis DHLR' verzweigt wird. Die zentrale Teilnehmerdatenbasis SHLR' startet daraufhin eine neue Nachricht LU' mit der entsprechenden Anfrage, in der die internationale Funkteilnehmeridentifikationsnummer IMSI und die Adresse NVLA enthalten sind. Die zentrale Ziel-Teilnehmerdatenbasis DHLR' kann dabei als zentrale Hintergrund-Teilnehmerdatenbasis aufgefaßt werden, in der die Teilnehmerdaten des Funkteilnehmers ebenfalls eingerichtet sind. Dies bedeutet, daß die Nachricht LU' zwischen der zur Bearbeitung der Anfrage vorgesehenen zentralen Teilnehmerdatenbasis SHLR' und der Hintergrund-Teilnehmerdatenbasis DHLR' ausgetauscht wird, um bei Ausfall der zentralen Teilnehmerdatenbasis SHLR' den Betrieb aufrecht zu halten. Somit sind die Funkteilnehmer nach einem Aufbau der Anrufverbindung von der jeweiligen Mobilvermittlungsstelle zur zentralen Hintergrund-Teilnehmerdatenbasis DHLR' wieder erreichbar. Dies ist möglich, da die zentrale Hintergrund-Teilnehmerdatenbasis DHLR' laufend die Informationen über den Aufenthaltsort des Funkteilnehmers in der Nachricht LU' empfängt. Sobald in allen dezentralen Teilnehmerdatenbasen des Mobilfunknetzes die Durchschaltung von Anrufen auf die zentrale Hintergrund-Teilnehmerdatenbasis DHLR' umgestellt ist, können auch wieder Nachrichten LU zur Erneuerung der Informationen bei einem Aufenthaltsortwechsel des Funkteilnehmers übertragen werden. Von der zentralen Hintergrund-Teilnehmerdatenbasis DHLR' wird als Antwort auf die eintreffende Nachricht LU' eine Quittungsnachricht LA an die zentrale Teilnehmerdatenbasis SHLR' zurückgesendet, um den Empfang der übermittelten Informationen zu bestätigen.

## Patentansprüche

1. Verfahren zur Übertragung von Nachrichten zwischen Einrichtungen eines digitalen zellular aufgebauten Mobilfunknetzes (PLMN), bei dem
- in mindestens einer zentralen Teilnehmerdatenbasis (SHLR, SHLR') eine Datenbasisinformation (HIN, HIN') zur Kennzeichnung einer zentralen Ziel-Teilnehmerdatenbasis (DHLR, DHLR') gespeichert wird, in der die Teilnehmerdaten des Funkteilnehmers gespeichert sind, und bei dem
- von der zentralen Teilnehmerdatenbasis (SHLR, SHLR') empfangene Nachrichten (SRI, LU) auf Grund der gespeicherten Datenbasisinformation (HIN, HIN') zu der **gekennzeichneten** zentralen Ziel-Teilnehmerdatenbasis (DHLR, DHLR') übertragen werden.

2. Verfahren nach Anspruch 1,
**dadurch gekennzeichnet,**
**daß** in der zentralen Teilnehmerdatenbasis (SHLR, SHLR') für Nachrichten, die auf Grund eines Anrufs zum Funkteilnehmer empfangen werden, die Teilnehmerrufnummer (MSISDN) des Funkteilnehmers zusammen mit der Datenbasisinformation als Teilnehmerdatum gespeichert wird, und daß von der zentralen Teilnehmerdatenbasis (SHLR) bei Empfang einer Nachricht (SRI), die eine Aufenthaltsabfrage auf Grund des Anrufs enthält, eine die Aufenthaltsabfrage enthaltende neue Nachricht (SRI') mit der Teilnehmerrufnummer (MSISDN) gestartet und an die zentrale Ziel-Teilnehmerdatenbasis (DHLR) gerichtet wird.

3. Verfahren nach Anspruch 2,
**dadurch gekennzeichnet,**
**daß** eine den Aufenthaltsort des Funkteilnehmers bestimmende Mobilitätsnummer (MSRN) von der zentralen Ziel-Teilnehmerdatenbasis (DHLR) angefragt, zur zentralen Teilnehmerdatenbasis (SHLR) und von dort als Antwort auf die empfangene Nachricht (SRI), die die Aufenthaltsabfrage enthält, rückgesendet wird.

4. Verfahren nach Anspruch 1,
**dadurch gekennzeichnet,**
**daß** bei Empfang einer Nachricht (LU), die auf Grund eines Aufenthaltsortwechsels des Funkteilnehmers eine Anfrage zur Erneuerung der Informationen über dessen Aufenthaltsort enthält, von der zentralen Teilnehmerdatenbasis (SHLR') eine die Anfrage enthaltende neue Nachricht (LU) gestartet und an die zentrale Ziel-Teilnehmerdatenbasis (DHLR') weitergeleitet wird.

5. Verfahren nach Anspruch 4,
**dadurch gekennzeichnet,**
**daß** von der zentralen Teilnehmerdatenbasis (SHLR') die Adresse (NVLA) einer für den Funkteilnehmer auf Grund des Aufenthaltsortwechsels zuständigen neuen dezentralen Teilnehmerdatenbasis (NVLR), in der die Teilnehmerdaten des Funkteilnehmers für die Dauer der Zuständigkeit gespeichert sind, und die internationale Funkteilnehmeridentifikationsnummer (IMSI) zur zentralen Ziel-Teilnehmerdatenbasis übertragen werden.

6. Verfahren nach Anspruch 4 oder 5,
**dadurch gekennzeichnet,**
**daß** bei Ausfall der zentralen Teilnehmerdatenbasis (SHLR') die zentrale Ziel-Teilnehmerdatenbasis (DHLR') als Hintergrund-Teilnehmerdatenbasis verwendet wird, die die für den Funkteilnehmer gespeicherten Teilnehmerdaten bereitstellt.

7. Verfahren nach einem der vorhergehenden Ansprüche,
**dadurch gekennzeichnet,**
**daß** dem Funkteilnehmer eine gewünschte Teilnehmerrufnummer frei zugewiesen wird, die unabhängig von der Zuordnung zu der durch eine Funkteilnehmerkennung (IMSI) festgelegten zentralen Teilnehmerdatenbasis (SHLR, SHLR') bewirkt, daß Anrufe zu der zentralen Ziel-Teilnehmerdatenbasis (DHLR, DHLR') gelenkt werden.

8. System zur Übertragung von Nachrichten zwischen Einrichtungen eines digitalen zellular aufgebauten Mobilfunknetzes (PLMN), bei dem
- mindestens eine zentrale Teilnehmerdatenbasis (SHLR, SHLR'), in der eine Datenbasisinformation (HIN, HIN') gespeichert ist, und eine zentrale Ziel-Teilnehmerdatenbasis (DHLR, DHLR'), in der die Teilnehmerdaten des Funkteilnehmers gespeichert sind, vorgesehen sind, und bei dem
- von der zentralen Teilnehmerdatenbasis (SHLR, SHLR') empfangene Nachrichten (SRI, LU) auf Grund der gespeicherten Datenbasisinformation (HIN, HIN') zu der **gekennzeichneten** zentralen Ziel-Teilnehmerdatenbasis (DHLR, DHLR') übertragbar sind.

## Claims

1. Method for transmitting messages between devices in a digital cellular mobile network (PLMN), in which
- database information (HIN, HIN') for identifying a central destination subscriber database (DHLR, DHLR') is stored in at least one central subscriber database (SHLR, SHLR'), with the subscriber data for the radio subscriber being stored in the central destination subscriber database (DHLR, DHLR'), and in which
- messages (SRI, LU) which are received from the central subscriber database (SHLR, SHLR') are transmitted on the basis of the stored database information (HIN, HIN') to the identified central destination subscriber database (DHLR, DHLR').

2. Method according to Claim 1,
**characterized**
**in that** the subscriber call number (MSISDN) of the radio subscriber is stored together with the database information as a subscriber data item in the central subscriber database (SHLR, SHLR') for messages which are received on the basis of a call to the radio subscriber, and in that, on receiving a message (SRI) which contains a location request on the basis of the call, the central subscriber database (SHLR) starts a new message (SRI'), which contains the location request and has the subscriber call number (MSISDN), and passes this to the central destination subscriber database (DHLR).

3. Method according to Claim 2,
**characterized**
**in that** a mobility number (MSRN) which defines the location of the radio subscriber is integrated by the central destination subscriber database (DHLR), is sent back to the central subscriber database (SHLR) and is sent back from there as a response to the received message (SRI) which contains the location request.

4. Method according to Claim 1,
**characterized**
**in that**, on receiving a message (LU) which contains a request to update the information about the location of the radio subscriber, as a result of the location of the radio subscriber changing, the central subscriber database (SHLR') starts a new message (LU) which contains the request, and passes this to the central destination subscriber database (DHLR').

5. Method according to Claim 4,
**characterized**
**in that** the central subscriber database (SHLR') transmits the address (NVLA) of a new decentralized subscriber database (NVLR), which is responsible for the radio subscriber as a result of the change in location and in which the subscriber data for the radio subscriber is stored for the duration of its responsibility, and transmits the international radio subscriber identification number (IMSI) to the central destination subscriber database.

6. Method according to Claim 4 or 5,
**characterized**
**in that**, if the central subscriber database (SHLR') fails, the central destination subscriber database (DHLR') is used as a background subscriber database, and provides the subscriber data which is stored for that radio subscriber.

7. Method according to one of the preceding claims,
**characterized**
**in that** the radio subscriber is freely assigned a desired subscriber call number which, irrespective of the association with the central subscriber database (SHLR, SHLR') as defined by a radio subscriber identification (IMSI), results in calls being passed to the central destination subscriber database (DHLR, DHLR').

8. System for transmitting messages between devices in a digital cellular mobile radio network (PLMN), in which
- at least one central subscriber database (SHLR, SHLR'), in which database information (HIN, HIN') is stored, and a central destination subscriber database (DHLR, DHLR'), in which the subscriber data for the radio subscriber is stored, are provided, and in which
- messages (SRI, LU) which are received from the central subscriber database (SHLR, SHLR') can be transmitted on the basis of the stored database information (HIN, HIN') to the identified central destination subscriber database (DHLR, DHLR').

## Revendications

1. Procédé de transmission d'informations entre équipements d'un réseau radio mobile cellulaire numérique (PLMN), dans lequel
- on enregistre dans au moins une base de données d'abonné centralisée (SHLR, SHLR'), une information de base de données (HIN, HIN') destinée à identifier une base de données d'abonné cible centralisée (DHLR, DHLR') où sont enregistrées les données de l'abonné mobile, et
- on transmet des informations (SRI, LU) reçues par la base de données d'abonné centralisée (SHLR, SHLR'), par suite de l'information de base de données (HIN, HIN') enregistrée, vers la base de données d'abonné cible centralisée (DHLR, DHLR') identifiée.

2. Procédé selon la revendication 1, **caractérisé en ce qu'**on enregistre dans la base de données d'abonné centralisée (SHLR, SHLR'), pour des informations reçues par suite d'un appel vers l'abonné mobile, le numéro d'abonné (MSISDN) de l'abonné mobile ensemble avec l'information de base de données en tant que donnée d'abonné et **en ce que** la base de données d'abonné centralisée (SHLR), lorsqu'elle reçoit une information (SRI) contenant une interrogation sur la localisation par suite dudit appel, lance à l'aide dudit numéro d'abonné (MSISDN) une nouvelle information (SRI') contenant ladite interrogation sur la localisation et la dirige vers la base de données d'abonné cible centralisée (DHLR).

3. Procédé selon la revendication 2, **caractérisé en ce qu'**un numéro de mobilité (MSRN) désignant la localisation de l'abonné mobile, lorsqu'il est interrogé par la base de données d'abonné cible centralisée (DHLR), est envoyé à la base de données d'abonné centralisée (SHLR), laquelle la renvoie comme réponse à l'information reçue (SRI) contenant ladite interrogation sur la localisation.

4. Procédé selon la revendication 1, **caractérisé en ce qu'**à réception d'une information (LU) contenant par suite d'un déplacement de l'abonné mobile une interrogation concernant la mise à jour des informations sur la localisation de celui-ci, la base de données d'abonné centralisée (SHLR') lance une nouvelle information (LU) contenant ladite interrogation et la retransmet à la base de données d'abonné cible centralisée (DHLR').

5. Procédé selon la revendication 4, **caractérisé en ce que** la base de données d'abonné centralisée (SHLR') transmet à la base de donnée cible centralisée, l'adresse (NVLA) d'une nouvelle base de données d'abonné décentralisée (NVLR) compétente pour l'abonné mobile par suite du déplacement et dans laquelle sont enregistrées les données de l'abonné mobile pour la durée de la compétence, ainsi que le numéro d'identification d'abonné mobile international (IMSI).

6. Procédé selon la revendication 4 ou 5, **caractérisé en ce qu'**en cas de défaillance de la base de données d'abonné centralisée (SHLR'), il est fait appel à la base de données d'abonné cible centralisée (DHLR') en tant que base de données d'abonné de fond, laquelle met à disposition les données d'abonné enregistrées pour l'abonné mobile.

7. Procédé selon l'une des revendications précédentes, **caractérisé en ce que** l'abonné mobile se voit assigner librement un numéro d'abonné souhaité lequel a pour effet, indépendamment de l'attribution à la base de données d'abonné centralisée (SHLR, SHLR') désignée par un identificateur d'abonné mobile (IMSI) que des appels seront dirigés vers la base de données d'abonné cible centralisée (DHLR, DHLR').

8. Système de transmission d'informations entre équipements d'un réseau radio mobile cellulaire numérique (PLMN), comprenant
- au moins une base de données d'abonné centralisée (SHLR, SHLR'), dans laquelle est enregistrée une information de base de données (HIN, HIN'), et une base de données d'abonné cible centralisée (DHLR, DHLR'), dans laquelle sont enregistrées les données de l'abonné mobile, et dans lequel
- des informations (SRI, LU) reçues par ladite base de données d'abonné centralisée (SHLR, SHLR') peuvent être transmises par suite de ladite information de base de données enregistrée (HIN, HIN') vers ladite base de données d'abonné cible centralisée (DHLR, DHLR').
